# EUROPEAN PATENT APPLICATION

(11) **EP 1 727 054 A2**
(43) Date of publication of application: **29.11.2006**
(21) Application number: 05025584.3
(22) Date of filing: 23.11.2005
(51) Int. Cl.: G06F 17/30

(54) **Digitized document archiving system**

(30) Priority: 24.05.2005 JP 2005150326
(71) Applicant: Hitachi, Ltd., Tokyo 100-8280 (JP)
(72) Inventor: Tanigawa, Yoshinobu c/o Hitachi, Ltd., Tokyo 100-8220 (JP); Honda, Yoshinori c/o Hitachi, Ltd., Tokyo 100-8220 (JP); Itoh, Shinji c/o Hitachi, Ltd., Tokyo 100-8220 (JP); Taruki, Ryosuke c/o Hitachi, Ltd., Tokyo 100-8220 (JP)
(74) Representative: Strehl Schübel-Hopf & Partner

(57) **Abstract**

A digitized document archiving system for saving a digitized document created from a receipt or a application form scanned by a scanner and related information created by registration device in a digitized document management device, wherein the digitized document management device performs a double scanning check with reference to a double scanning check verification and registration data for a double scanning check when it receives a double scanning check request including a characteristic quantity from the registration device, and sends the check result to the registration device, and the registration device deletes the created digitized document and the corresponding related information, if it is determined as double scanning.

## Description

### BACKGROUND

The present invention relates to a technique of digitizing and archiving paper documents. More specifically, the present invention relates to a technique of preventing a double scanned paper document from being saved.

An electronic filing system have been put into practical use for digitizing paper documents such as a receipt and an application form with a scanner and managing the paper documents in the form of image data (also referred to as digitized documents) so that a paper handling cost is reduced and information is shared more easily. In the system, paper documents are scanned by a scanner and made into digitized documents. Then, character information on the document, which is made into an image, is extracted by OCR technique as code data and used as data for computer processing that supports compilation and analysis. This system facilitates operator's searching of a document, which is made into an image, by having the operator register additionally searching key information.

Many problems may occur when the same receipt or application form is digitized more than once. For example, if an application form is scanned twice and managed in an electronic filing system, customer information and accounting information described in the application are also counted twice, which may lead duplicate billing to the customer. Techniques for preventing such double scanning or double registration have been proposed.

A multifunction machine is a system similar to an electronic filing system. A technique for preventing copying of a document is disclosed, for example, in JP-A-2003-263084, which is similar to a technique for preventing double scanning and registering of a document. With this technique, manuscripts which are desired to be prevented from being copied, patterns such as marks and stamps, and character strings are registered in a multifunction machine. When a registered pattern is detected after a manuscript is scanned, the technique prevents copying of the manuscript.

A technique for preventing double input of a document is disclosed, for example, in JP-A-3412441. An image processing device with the technique has a function of printing a mark on a document indicating that the document has been scanned. Double input of the document is detected by determining and identifying the mark when a document with the mark printed on it is input.

A technique for preventing double scanning of a document by causing an information scanning device like a barcode reader to store previously scanned information and to determine whether the information scanned anew is the same as the saved previously scanned information is disclosed in JP-A-2745782.

### SUMMARY OF THE INVENTION

Conventional arts have problems below.

When a technique disclosed in JP-A-2003-263084 is used, double scanning and registering of paper documents can be prevented, though, it is troublesome for an operator to register information on documents to be prevented from being copied before scanning a document. Moreover, this technique cannot control scanning so as to enable a document to be scanned only once and disable it more than once.

A technique disclosed in JP-A-3412441 can prevent double scanning and registering of a paper documents, though, it requires an image processing device to have a mechanical printing mechanism, which causes problems in that the device may have a physical failure or printing cost including a cost of ink increases.

When a technique of JP-A-2745782 is used, information on a number of documents cannot be stored, as the technique stores previously scan information in a scanning device like a barcode reader, which has a limited memory capacity. If a single barcode reader scans a number of documents, the barcode reader has to delete the information that has scanned in and stored, which may lead a failure in preventing double scanning of a document. When a number of documents are treated, a plurality of scanning devices may be used to make the operations more efficient. The method of Patent Laid-Open No. 2745782 has another problem in that it cannot prevent double scanning of a document when a previously scanned document is scanned by another barcode reader.

In order to solve the problems, the present invention provides a digitized document archiving system and a method and a program for the same for realizing a double scanning verification by (1) eliminating a costly printing mechanism and (2) getting rid of a trouble to register information on a document to be verified for double scanning, while (3) accommodating scanning by a plurality of scanning devices.

In other words, the present invention is a digitized document archiving method for saving a digitized document created by scanning a document and related information of the digitized document, specifically characterized by creating related information including a characteristic quantity of the digitized document relating to the digitized document, saving the digitized document and the related information, performing a double scanning check with reference to a double scanning verification rule and registration data for a double scanning check, which are previously registered, based on the digitized document and the related information, and deleting the created digitized document and the corresponding related information, if the check result indicates double scanning.

A more specific aspect of the present invention is a digitized document archiving system including at least a reading device (scanner), one or more registration devices, one or more administrator's devices, and one or more digitized document management devices, which are coupled to a communication network, for making a paper document such as a receipt or an application form scanned by a scanner via a registration device for accepting operator's operation as a digitized document and saving the data and related information created by the registration device on the digitized document management device;
wherein, when the digitized document management device receives a double scanning check requesting message including a characteristic quantity from the registration device that created the digitized document, the digitized document management device performs double scanning check process with reference to the stored double scanning verification rule and registration data for a double scanning check and sends the check result to the registration device, and the registration device received the result deletes the created digitized document and the corresponding related information if it is determined to correspond to double scanning.

The digitized document management device is characterized in that when it performs double scanning check process, it normalizes and compares the characteristic quantity received from the registration device and the characteristic quantity included in registration data for a double scanning check saved in the digitized document management device.

The digitized document management device is characterized in that when the result of the double scanning check process determines that it does not correspond to double scanning, the digitized document management device creates and registers the characteristic quantity received from the registration device as registration data for a double scanning check.

As a printing mechanism can be eliminated in the above aspect, double scanning and registering of paper documents can be prevented without requiring cost. As the above aspect captures information for detecting double scanning as a step of digitizing process each time a paper document is scanned, it has no trouble in registering the information as another process. As the aspect digitizes paper forms in parallel by using a plurality of reading devices, it can make the operations more efficient.

According to the present invention, double scanning or double registering of a paper document can be prevented without requiring cost. Accordingly, the present invention improves efficiency of the operations as it needs not register information for detecting double scanning in another step and can use a plurality of reading devices.

These and other benefits are described throughout the present specification. A further understanding of the nature and advantages of the invention may be realized by reference to the remaining portions of the specification and the attached drawings.

### BRIEF DESCRIPTION OF THE DRAWINGS

Figure 1 shows a system configuration diagram illustrating an embodiment of the present invention.
Figure 2 shows an exemplary hardware configuration of the registered device, the administrator's device and the digitized document management device.
Figure 3 shows a diagram showing a processing flow until digitizing and saving of a paper document.
Figure 4 shows an exemplary flow of the double scanning check process in the digitized document management device.
Figure 5 shows an exemplary data table showing a double scanning verification rule.
Figure 6 shows an exemplary paper document to be scanned.
Figure 7 shows an exemplary registering application screen of the registration device.
Figure 8 shows an exemplary OCR correction/data entry screen of the registration device.
Figure 9 shows an exemplary screen displayed on the registration device when double scanning is detected.
Figure 10 shows another example of a paper document to be scanned.
Figure 11 shows an example of a characteristic quantity.

### DETAILED DESCRIPTION OF THE EMBODIMENTS

An embodiment of the present invention will be described in detail with reference to the drawings.

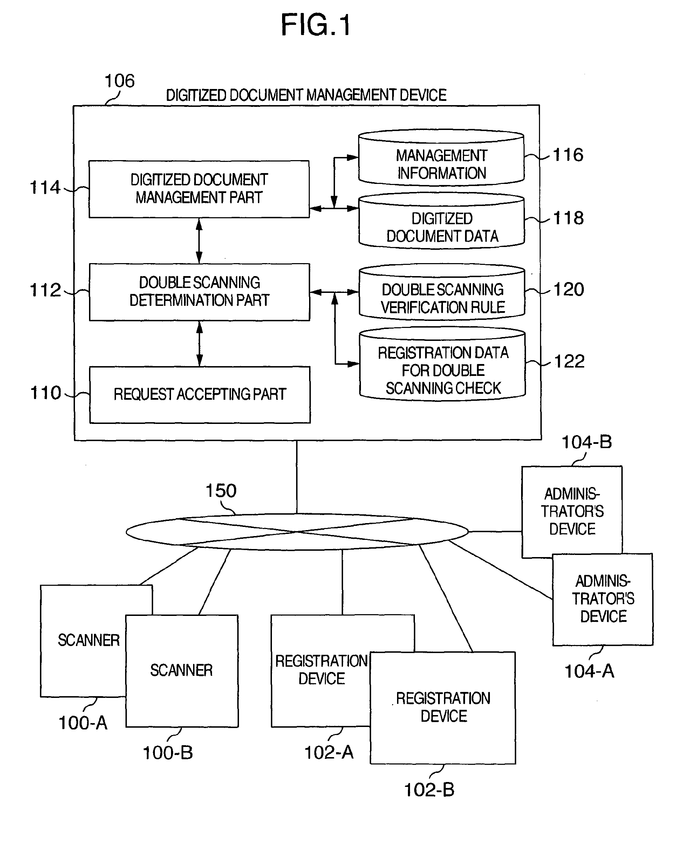

Figure 1 shows a configuration of a digitized document archiving system illustrating an embodiment of the present invention. The digitized document archiving system includes a plurality of scanners 100, one ore more registration devices 102, one or more administrator's devices 104, one or more digitized document management devices 106, and a communication network 105 coupled to the devices.

The scanner 100 is a device for scanning a paper document including a receipt or an application form and making the document into a digitized document. A data form of a digitized document is general image data. The bitmap format or JPEG format can be used for the data form. For the standard sized paper documents, a scanner with an auto-feeder mechanism can be used. For the non-standard sized paper documents, a stand-type scanner for scanning an image of a manuscript placed on a desk can be used.

The registration device 102 controls scanners 100 in response to an acceptance of operator's operation, or captures a digitized document created by the scanner and performs OCR process, management information registration process and registration data registering process.

The administrator's device 104 is a device for accepting operations of an administrator of the digital document archiving system, providing a function for an administrator to display the system's operating status or view data managed in the digitized document management device 106.

The digitized document management device 106 is a device for receiving and managing registration data sent from the registration device 102. The digitized document management device 106 provides a function of sending registration data requested from the administrator's device 104.

The digitized document management device 106 has processing parts including a request accepting part 110, double scanning determination part 112 and digitized document management part 114.

The request accepting part 110 receives a request from another device and decides what process to take. The double scanning determination part 112 determines whether the digitized document created by the registration device 102 is double scanned or not based on a previously registered double scanning verification rule 120 in response to the double scanning check request received from the registration device 102. The double scanning determination part 112 creates registration data for a double scanning check 122 on registration. The digitized document management part 114 manages digitized document data 118, which is registration data received from the registration device 102, and the management information 116 relating to the digitized document.

The digitized document management device 106 is preferably a computer with a high speed processing capability, allowing multiple accesses at a time for enabling a plurality of registration devices 102 and a plurality of administrator's devices 104 to be serviced. The digitized document management device 106 desirably has a mass storage device for managing a number of digitized documents. When the system has two or more digitized document management devices 106, the devices 106 can use a storage technique such as a NAS (Network Attached Storage) or a SAN (Storage Area Network) for sharing various programs and various types of data.

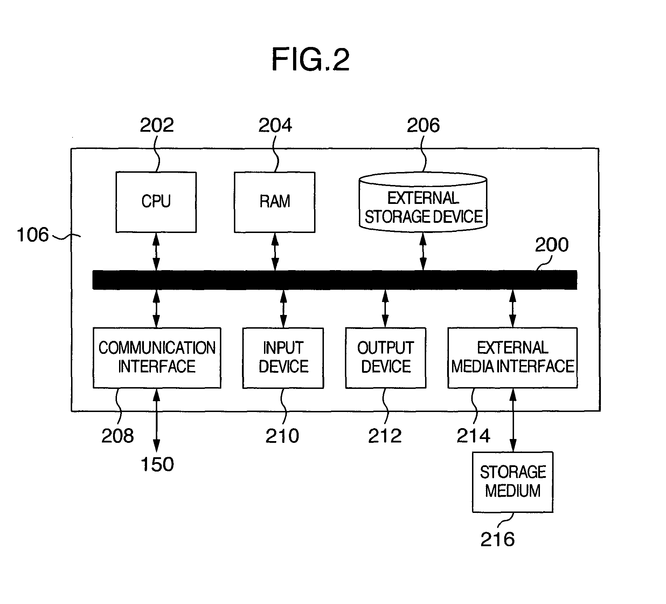

A hardware configuration of the registration device 102, the administrator's device 104 and the digitized document management device 106 will be described with reference to Figure 2. The devices can be implemented by a general purpose personal computer including a central processing unit (CPU) 202, an input device 210 such as a keyboard or a mouse, an external storage device 206 such as a hard disk or a storage device such as semiconductor memory (RAM) 204, a CRT display, a liquid crystal display, an output device 212 such as a printer, an external media interface 214 for reading/writing to/from a storage medium 216 such as an optical medium, and a communication interface 208 for communication, which are coupled to each other via an inner communication line 200 such as a bus. The devices are not limited to a personal computer and any computer can be used if only the computer is provided with an input device and an output device for a user and a communication device.

The communication network 150 can be implemented by a communication network such as a wired network including a public network, the Internet, the ISDN, a private line, a LAN, and a wireless network using base stations for mobile communication or communication satellites.

In the system including the plurality of scanners 100, the plurality of registration devices 102, and the plurality of digitized document management devices 106, each of the devices connects to and communicates with its counterpart by using an address of the other device, which is its counterpart previously set.

Each of the devices may register addresses of other devices provided with the same function. For example, if a scanner 100 registers addresses of more than one registration devices 102, the counterpart of the scanner 100 is selected in the manner of round robin, for example.

Each function or each processing part of each of the above devices is embodied by the central processing unit 202 executing a program stored in the external storage device 206. Each program may be previously stored in the external storage device 206, or imported from another device through the detachable storage medium 216, the communication network 150 that is a communication medium, or carrier waves or digital signals that propagate on the communication network 150, which can be used by the device if needed.

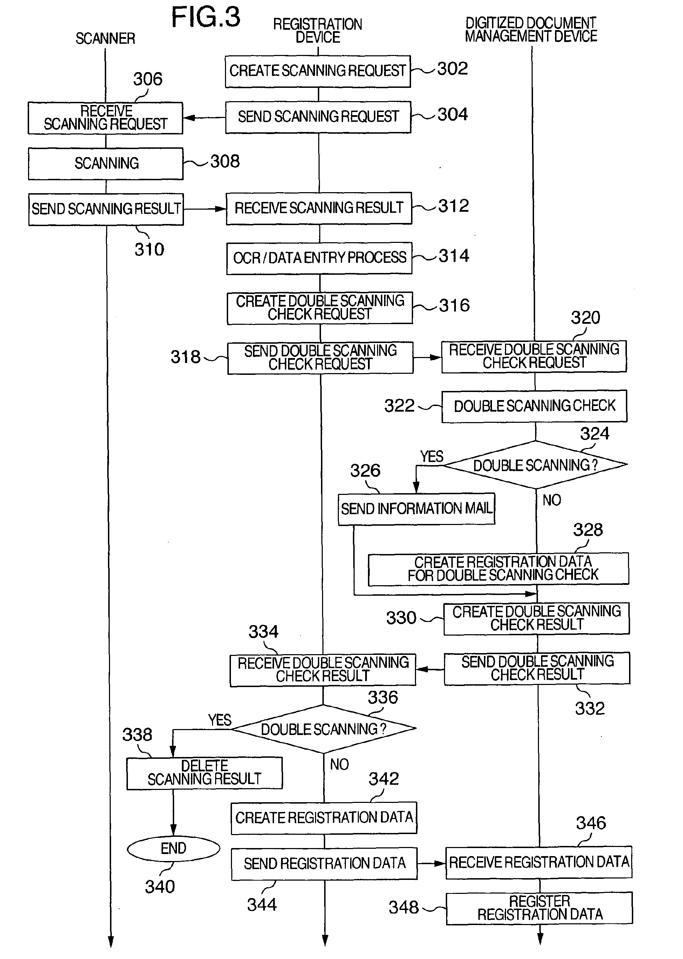

Figure 3 is a diagram showing a procedure of operations from digitizing to saving of a paper document in the digitized document archiving system.

The registration device 102 accepts operator's operation and creates a scanning request (step 302). Then it sends the scanning request to the scanner 100 (step 304). When the scanner 100 receives the scanning request, it performs scanning and sends a digitized document of the scanning result to the registration device (steps 306-310). When the registration device 102 receives the scanning result from the scanner 100, it performs OCR process and data entry process (steps 312, 314).

The OCR process 314 is a process for converting an image of characters or numbers included in a digitized document into code information that can be processed by computer. This facilitates compilation and analysis of information including names, street addresses, contracts, sums of money included in the digitized document.

The OCR process 314 is performed by using document defining information defined for each document type that is previously registered in the registration device 102. The document defining information is information necessary for reading character information on a digitized document. The document defining information includes a document type identifier, the document name, physical size information of a document, layout information such as a ruled line, position information of a field, in which character information is described, and information indicating a character type such as the Chinese character and the number.

The registration device 102 selects document defining information according to the document type designated by an operator or automatically determines the document type by using document defining information and performs the OCR process 314. As the OCR process 314 usually does not have 100 percent accuracy of recognizing character information, the registration device 102 desirably performs modification of the recognized information in response to an acceptance of operator's operation.

The data entry process 314 is a process of accepting data inputted by an operator. This enables management information on a digitized document to be registered, and data to be easily searched in future by using the management information.

Then, the registration device 102 creates double scanning check request data and sends the data to the digitized document management device 106 (steps 316, 318). The double scanning check request data includes data specific to the created digitized document (characteristic quantity). The characteristic quantity includes character information scanned by the OCR process and modified by an operator. It also includes data inputted at the data entry process.

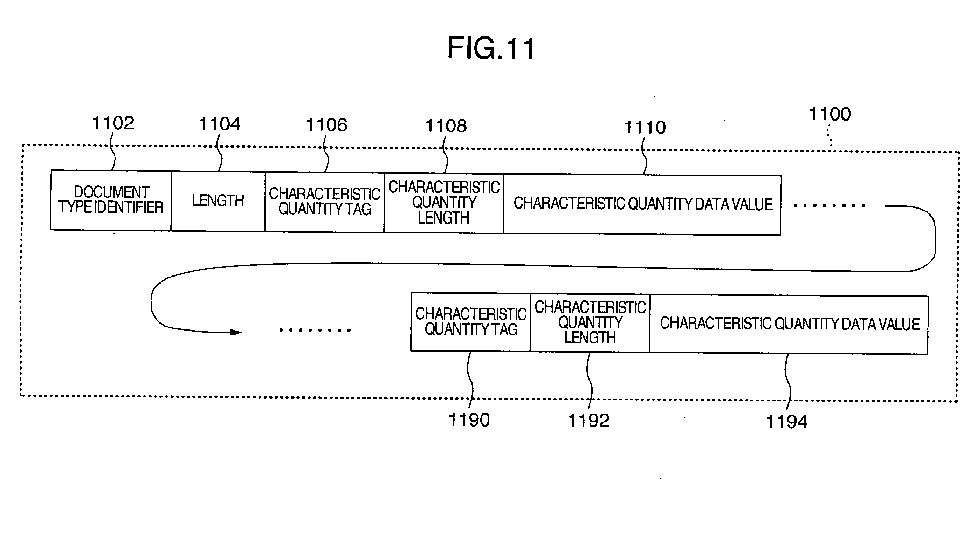

Exemplary data of a characteristic quantity of a digitized document will be described with reference to Figure 11.

Figure 11 is an exemplary data structure of a characteristic quantity. A data block 1102 stores identification codes for identifying documents. A data block 1104 stores information on length of the entire data structure. Data blocks 1106, 1108, 1110-1190, 1192, 1194 are areas for storing values of characteristic quantities. Continuous three data blocks form one unit, with storing tag information indicating the data type, information indicating data length and a data value are stored in respective data blocks. When the digitized document management device 106 receives the double scanning check request from the registration device 102, it performs the double scanning check process (steps 320, 322).

When the digitized document management device 106 determines that it corresponds to double scanning (Yes at step 324), it sends information mail indicating that double scanning is detected to the administrator's device 104 (step 326).

When it does not correspond to double scanning (No at step 324), the digitized document management device 106 extracts a characteristic quantity included in the double scanning check request and registers it as registration data for a double scanning check 122 (step 328). Then, the digitized document management device 106 creates the double scanning check result and sends the result to the registration device 102 (steps 330, 332).

The registration device 102 receives the double scanning check result and determines whether it is double scanning or not (steps 334, 336). If it is double scanning (Yes at step 336), the registration device 102 deletes the digitized document of the scanning result and related information such as OCR result information and finishes the process (steps 338, 340).

If it is not double scanning (No at step 336), the registration device 102 creates registration data in response to an acceptance of operator's operation and sends the data to the digitized document management device 106 (steps 342, 344). The registration data is data including digitized document data, data entry information, and OCR result information. The registration data may include data digitally signed by an operator's secret key or time stamped data obtained from a time-stamping authority, which is a reliable third party, for preventing and detecting tampering of the registration data. When the digitized document management device 106 receives the registration data, it registers the registration data as the digitized document data 118 and the other management information 116 (steps 344, 346).

Data common to information of the registration data for a double scanning check 122 and the management information 116, such as the OCR result information or the data entry information, can be managed collectively instead of managed in both of the data 122 and the information 116. For example, the registration data for a double scanning check 122 may be managed so that it includes data for referencing to the management information 116. This may cut down disk capacity of the digitized document management device 106.

As the digitized document management device 106 sends information mail indicating double scanning to the administrator's device 104 at step 326, the information mail may include a registered digitized document and a currently scanned digitized document. The administrator's device 106 may display the two digitized documents side by side on the screen of the administrator's device 106 with a button for the administrator operating the administrator's device 106 to determine whether it corresponds to double scanning or not. When the administrator's device 106 accepts input of the determination of whether it corresponds to double scanning or not from the administrator, it may send the result to the digitized document management device 106. The digitized document management device 106 accepted this result may determine whether it corresponds to double scanning or not based on the determination.

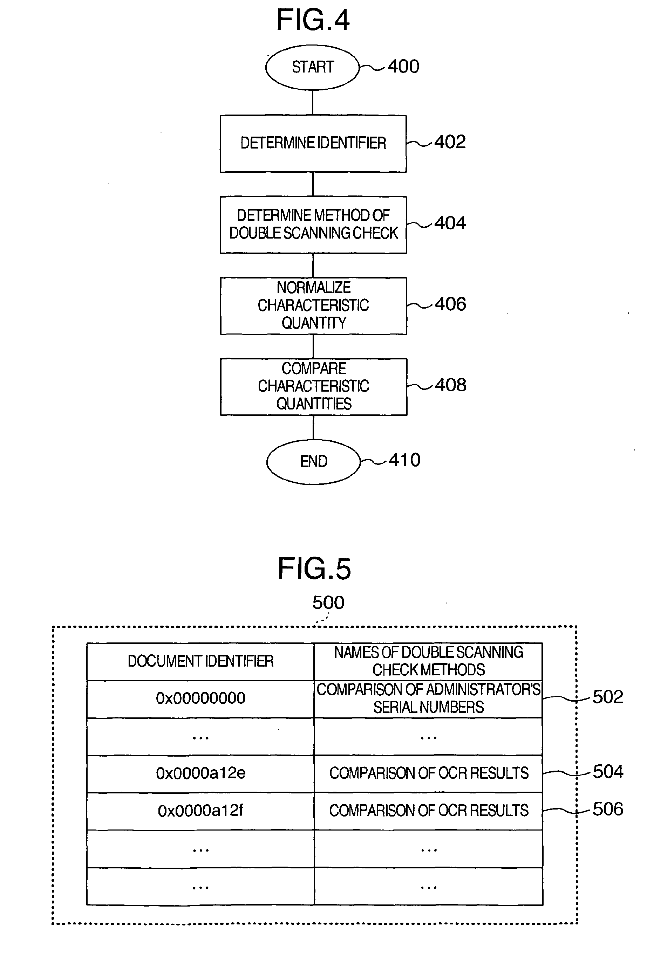

Figure 4 is a detailed flowchart of double scanning check process (step 322) performed by the digitized document management device 106. The digitized document management device 106 determines a document identifier included in double scanning check request data at step 402 and determines a double scanning verification method (step 404). The double scanning verification method determination process 404 references to the double scanning verification rule 120 shown in Figure 5.

In Figure 5, a double scanning verification rule table 500 includes a column storing identification codes indicating types of documents and a column storing names of double scanning check methods (double scanning check method names).

The double scanning check method name in line 502 is "comparison of administrator's serial numbers". Comparison of administrator's serial numbers is a method of using an administrator's serial number inputted by an operator operating the registration device 102 in comparing characteristic quantities 408. The double scanning check method name in lines 504 and 506 is "comparison of OCR results". This method compares OCR result information in comparing characteristic quantities 408. This table 500 assures of a double scanning check method appropriate for a document to be performed.

Then, the double scanning check process 322 performs normalization process of a characteristic quantity (step 406). Here, a characteristic quantity included in the double scanning check request data is normalized. Specifically, unification of character codes, unification of double-byte characters and single-byte characters and unification in dealing of a white space and control codes can be considered. Finally, data of respective normalized characteristic quantities is compared for bits arranged side by side (step 408). Such normalizing process can solve differences between character codes which differ for each platform of the registration device 102. Accordingly, the normalizing process enables various registration devices 102 to be implemented according to corporate needs, such as a sophisticated dedicated device, a general purpose PC or a device using an open source OS, while preventing a determination error in comparing characteristic quantities 408. If an operator operating the registration device 102 mixes different character types with the same meaning (for example, single-byte characters and double-byte characters in alphanumeric characters) in inputting data, this normalizing process may improve reliability in comparing characteristic quantities 308. For the registration data for a double scanning check 122, the normalized data is registered.

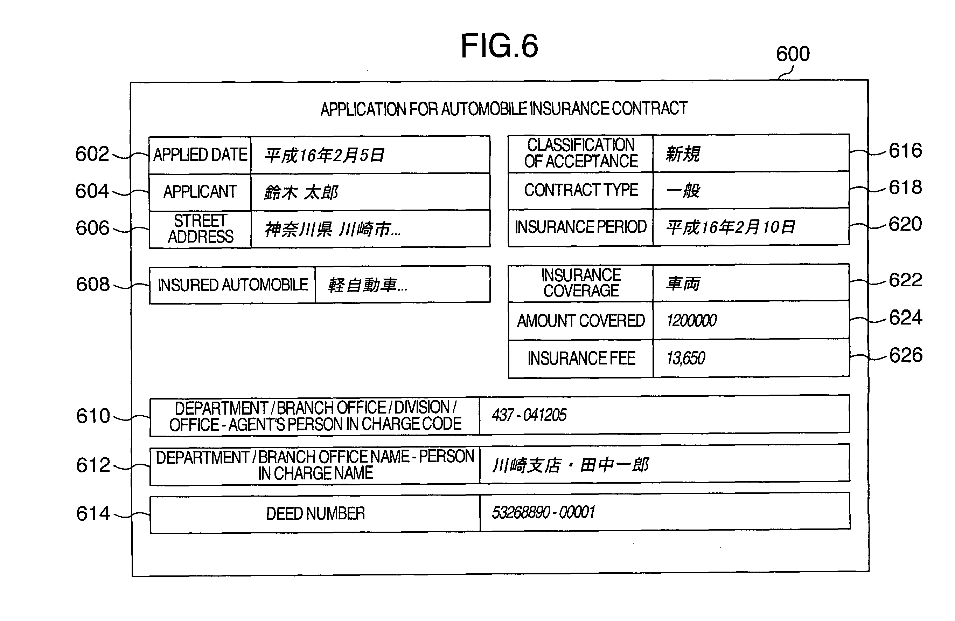

Figure 6 is an exemplary paper document to be scanned. An application for automobile insurance contract 600 is a standard sized document. This application includes various fields for an applicant and an insurance company to fill in. For example, entries for an applicant include an applied date field 602, an applicant field 604, and a street address field 606. Entries for an insurance company include a department/branch office/division/office - agent's person in charge code 610, a department/branch office name - person in charge name field 612, and a deed number field 614. The OCR process at the registration device 102 recognizes character information and number information filled in the fields and creates code information, which is easily processed by a computer, to support compilation or analysis operations.

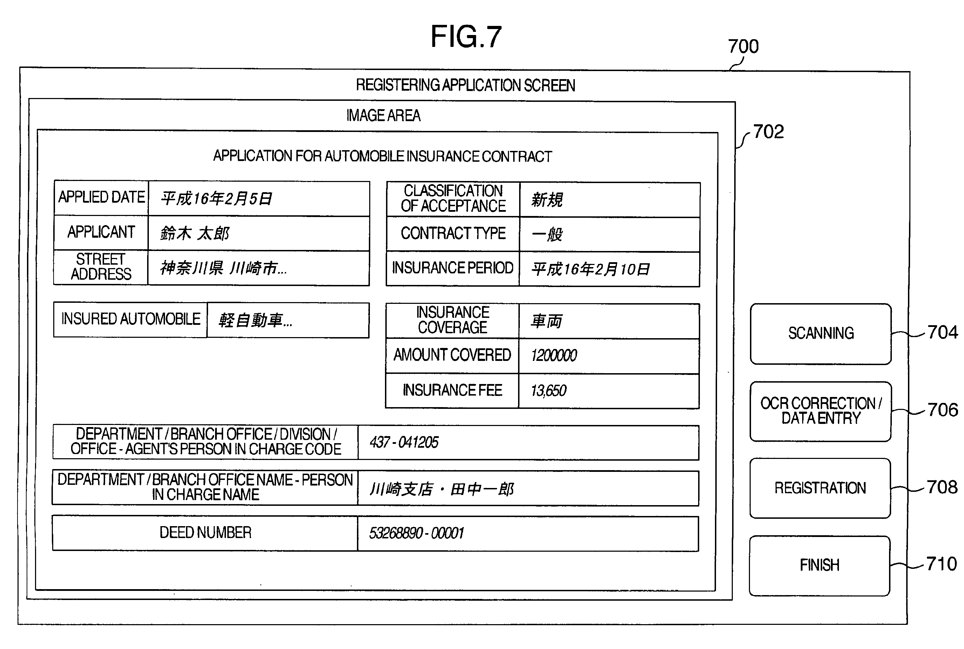

Figure 7 is an exemplary screen displayed on the display of the registration device 102 operated by an operator. A button 704 activates a function of controlling the scanner 100. When this button is selected (for example, by mouse click operation), the scanner 100 scans set paper document and creates a digitized document. The display shows the created digitized document on an image area 702. When the button 704 is selected, a screen for selecting a type of documents can be displayed and the scanner can be activated in response to selection by an operator. A list of types of documents is created with reference to document defining information stored in the registration device 102.

A button 706 activates a screen displaying function for OCR correction and data entry. A button 708 activates a function of sending registration data including a digitized document, OCR result information and data inputted by an operator to the digitized document management device 106. When the button 708 is selected, a function of adding a digital signature or a time stamp function may be activated and the registration data may be sent to the digitized document management device 106. With the function of adding a digital signature or the time stamp function, tampering of the registration data can be prevented or detected, which improves security.

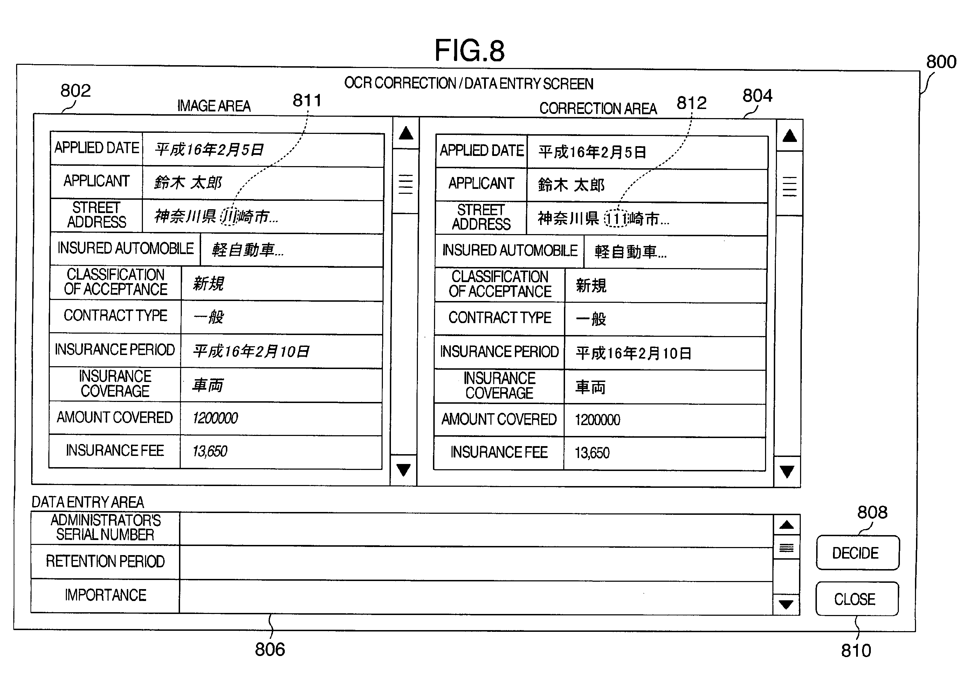

Figure 8 is an exemplary screen displayed on the display of the registration device 102 operated by an operator. This screen is an OCR correction/data entry screen 800 displayed after a button 606 is selected. An image area 802 shows a list of partial image data cut out from a digitized document of the paper document 600 for each field. A correction area 804 displays code information including characters and numbers recognized from each field as a result of OCR process.

As the OCR process does not have the 100 percent character recognition rate, code information displayed in the correction area 804 includes what is wrongly recognized. In this example, the street address field is wrongly recognized, with what should be recognized as a Chinese ideograph 811 but displayed as "111" 812 in error. As the correction area 804 is an editable area, the operator can correct the wrongly recognized information as the Chinese ideograph 811 within the correction area.

A data entry area 806 is an area for accepting input of data relating to the digitized document. The data entry area 806 accepts input of information including an administrator's serial number numbered by an external system, a retention period of a digitized document and importance of a digitized document. A button 808 provides a function of deciding a result of the OCR process to be displayed in the correction area 804 and information in the data entry area 806 when the button is selected. According to the decision, the registration device creates and sends a double scanning check request (steps 316, 318). A button 810 activates a function of closing an OCR correction/data entry screen 800 when the button is selected.

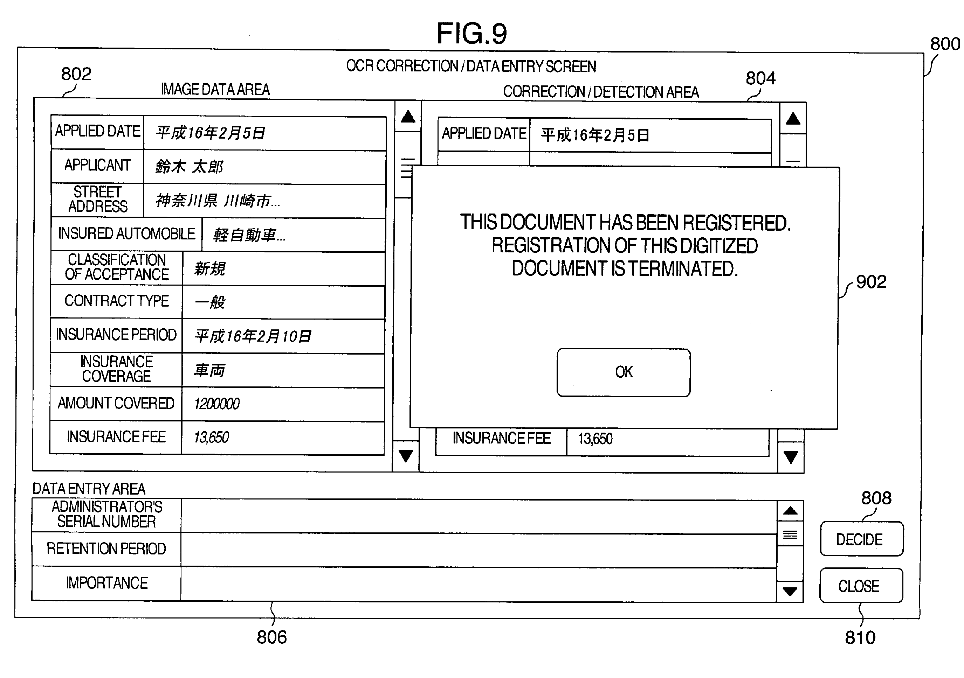

Figure 9 is a dialog box 902 displayed when the button 808 is selected and the document corresponds to double scanning. The dialog box 902 can inform an operator "the document corresponds to double scanning". When the button in the dialog box is selected, a digitized document, an OCR result and data entry information, which are to be operated, are deleted.

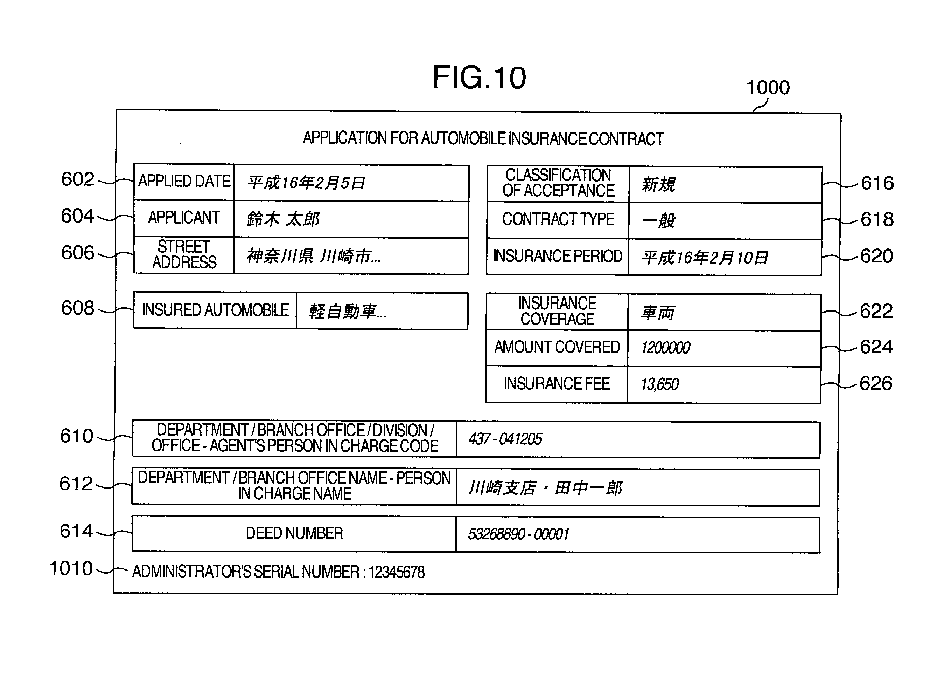

Figure 10 is another example of a paper document to be scanned. In the margin of an application form of a car insurance contract 1000, an administrator's serial number numbered by an external system (for example, a digital bookkeeping system for managing evidenced documents). As a method of inputting the management number, a clerk fills the number before scanning a paper document. An operator operating the registered device 102 inputs the management number in the data entry area 806 on the OCR correction/data entry screen 800.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A digitized document archiving system for saving a digitized document scanned and created by more than one scanners and related information created by more than one registration devices in more than one digitized document management devices;
wherein the registration device
creates related information including a characteristic quantity of the digitized document relating to the digitized document,
saves the digitized document and the related information, and
creates a double scanning check request based on the digitized document and the related information and sends the request to the digitized document management device, and
the digitized document management device
performs a double scanning check with reference to a double scanning verification rule and registration data for a double scanning check, which are previously registered, when the digitized document management device receives the double scanning check request from the registration device, and
sends the check result to the registration device, and
the registration device deletes the created digitized document and the corresponding related information, if the check result indicates double scanning.

2. The digitized document archiving system according to claim 1,
wherein the system is **characterized by** comprising an administrator's device, and
**characterized in that** the digitized document management device sends an information message indicating that it corresponds to double scanning to the administrator's device if it is determined as double scanning from the double scanning check result.

3. The digitized document archiving system according to claim 1,
wherein the system is **characterized in that** the digitized document management device
shapes at least one of the characteristic quantity received from the registration device and a characteristic quantity included in the registration data for double scanning check saved in the digitized document management device so that what are determined as double scanning have the same expressive form when the double scanning check is performed.

4. The digitized document archiving system according to claim 1,
wherein the system is **characterized in that** the digitized document management device
creates registration data for double scanning check from the characteristic quantity received from the registration device and registers the data if it is not determined as double scanning from the double scanning check result.

5. The digitized document archiving system according to claim 1,
wherein the system is **characterized in that** the characteristic quantity is a result of OCR process performed by the registered device.

6. The digitized document archiving system according to claim 1,
wherein the system is **characterized in that** the characteristic quantity is an administrator's serial number added by the registration device so that a digitized document created at the scanning can be determined.

7. A digitized document saving method for saving a digitized document created by scanning a document and related information of the digitized document, comprising the steps of:
creating related information including a characteristic quantity of the digitized document relating to the digitized document,
saving the digitized document and the related information,
performing double scanning check with reference to a double scanning verification rule and registration data for double scanning check, which are previously registered, based on the digitized document and the related information, and
deleting the created digitized document and the corresponding related information, if the check result indicates double scanning.
